(19)

**Europäisches Patentamt**
**European Patent Office**
**Office européen des brevets**

(11) **EP 3 585 739 B1**

(12) **EUROPEAN PATENT SPECIFICATION**

(45) Date of publication and mention
of the grant of the patent:
**15.09.2021 Bulletin 2021/37**

(51) Int Cl.:
***C03B 17/06*** (2006.01)    ***G11B 5/62*** (2006.01)

(21) Application number: **18757267.2**

(86) International application number:
**PCT/US2018/019411**

(22) Date of filing: **23.02.2018**

(87) International publication number:
**WO 2018/156887 (30.08.2018 Gazette 2018/35)**

(54) **DOME OR BOWL SHAPED GLASS AND METHOD OF FABRICATING DOME OR BOWL SHAPED GLASS**

KUPPEL- ODER SCHALENFÖRMIGES GLAS UND VERFAHREN ZUR HERSTELLUNG VON KUPPEL- ODER SCHALENFÖRMIGEM GLAS

VERRE EN FORME DE DÔME OU DE BOL ET PROCÉDÉ DE FABRICATION DE VERRE EN FORME DE DÔME OU DE BOL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.02.2017  US 201762463198 P**
**12.02.2018  US 201862629338 P**

(43) Date of publication of application:
**01.01.2020 Bulletin 2020/01**

(73) Proprietor: **Corning Incorporated**
**Corning, New York 14831 (US)**

(72) Inventors:
• **BOWDEN, Bradley Frederick**
**Painted Post**
**New York 14870 (US)**
• **MADAPUSI, Shriram Palanthandalam**
**Painted Post**
**New York 14870 (US)**

• **PAYNE, Jeremy Nathan**
**Painted Post**
**New York 14870 (US)**
• **XIONG, Qingang**
**Painted Post**
**New York 14870 (US)**
• **YANG, Yang**
**Painted Post**
**New York 14870 (US)**

(74) Representative: **Elkington and Fife LLP**
**Prospect House**
**8 Pembroke Road**
**Sevenoaks, Kent TN13 1XR (GB)**

(56) References cited:
EP-B1- 0 173 418        WO-A1-2013/047585
JP-A- 2006 225 181      US-A1- 2008 066 498
US-A1- 2008 066 498     US-A1- 2011 030 424
US-A1- 2013 152 634

**Description**

**BACKGROUND**

*Field*

The present disclosure relates generally to glass sheets and glass substrates and methods for fabricating glass sheets and glass substrates. More particularly, it relates to glass substrates for hard disk drives and methods for fabricating glass substrates using a glass making process or system, such as with a glass drawing apparatus.

*Technical Background*

It has been over sixty years since the introduction of the first magnetic recording hard disk drive (HDD) designed and manufactured by IBM in 1956. The drive capacity was about 4.4 MB, which was the same as the first personal computer hard drives that appeared in the early 1980's. Currently, HDDs with storage capacity on the order of 10 TB are available and are used in modern computer systems. With the advent of new technologies, the cost per drive and the physical size of a drive have been reduced significantly. The combination of these prominent developments has made an ever-increasing demand for HDDs in the market.

HDDs store information on platters which consist of a thick non-magnetic substrate with thin ferromagnetic film coatings. There are two predominant hard disk drive form factors: 2.5" (65 mm) that typically use glass substrates and 3.5" (95 mm) that typically use aluminum substrates. Price pressure on HDDs from solid state drives is forcing HDD manufacturers to find ways to reduce the cost per TB of drives. The two most promising methods to reduce cost are to increase the number of platters per drive and to increase the areal density (TB/in$^2$) of the platters. Increasing the number of platters requires the use of thinner platters to maintain a constant drive form factor. In that case, it is desirable to increase the stiffness of the substrate material to offset the reduction in stiffness due to thickness reduction. This is one factor driving HDD manufacturers to consider glass in 95 mm HDDs. Increasing the areal density requires the use of a new magnetic thin films technology called heat assisted magnetic recording (HAMR). This technology requires high temperature (e.g., greater than 600 °C) annealing of the magnetic thin films during deposition. Aluminum substrates cannot be used for HAMR due to the high process temperatures. This is also driving the adoption of glass substrates for 95 mm HDD applications.

There are many attributes which are relevant to disk performance in HDDs. For example, flatness is of relevance as the number of disks in a HDD assembly increases, platter thickness and spacing become much smaller. Thinner platters have much less flexural stiffness and are more likely to fail during handling and in the operational state. Any warp (i.e., out of plane distortion) of the substrate will amplify the dynamic response of the platter during operation and increase the risk of read/write errors due to misregistration of the read/write head relative to the track within which information is being written/read. In a worst case scenario, the head may "crash" into the disk resulting in catastrophic failure of the HDD. One of the dominant factors to increase the areal density is to reduce the track width so that more tracks can be written in the same disk radius. As track width decreases, the sensitivity of the drive to out of plane distortion of the platters increases. Therefore, it is expected that read and write errors will increase with increasing areal density and thinner platters without a tight restriction on the disk flatness.

Conventional glass hard disk substrates are manufactured by a multistep process involving the following basic steps: (1) press-molding a glass puck, (2) shaping the puck into a disk "blank" using core drilling and edge scribing/grinding, (3) lapping the surface of the blank to reduce its thickness to near the final desired thickness, (4) chamfering and edge polishing the blank, (5) lapping the blank in one or more steps to further reduce the thickness of the blanks and eliminate surface damage from the previous steps, and (6) polishing the blank to achieve a surface roughness that is sufficiently low to enable the deposition of smooth magnetic films. The press molded puck thickness is typically greater than 1 mm which requires several lapping steps to reduce the thickness to a target thickness of less than 0.7 mm, so it is difficult to produce substrates economically by this method. Precise control of the blank shape is also difficult to achieve by press molding or to maintain during such significant material removal.

Thus, there is a need in the art to provide a high performance glass disk for HDDs and to provide an improved process to achieve such high performance glass disks. JP 2006225181 A relates to glass substrates for a magnetic recording medium.
US 2008066498 A1 relates to methods of fabricating glass sheets used as substrates in display devices such as liquid crystal displays (LCDs).

**SUMMARY**

Some aspects of the present disclosure relate to a glass sheet. The glass sheet includes a first major surface,

a second major surface opposite to the first major surface, and an edge surface extending between the first major surface and the second major surface. The glass sheet includes a thickness between 0.3 mm and 2 mm. The glass sheet includes a dome or bowl shape.

The invention relates to an annular glass substrate. The annular glass substrate includes a first major surface, a second major surface opposite to the first major surface, and an edge surface extending between the first major surface and the second major surface. The annular glass substrate includes a thickness between 0.3 mm and 2 mm. The annular glass substrate includes a dome or bowl shape. The warp of the annular glass substrate is less than 0.2 $\mu$m.

Another aspect of the present disclosure relates to a method for processing glass. The method includes forming a ribbon of molten glass in a draw direction. The method includes controlling temperature gradients in a setting zone of the ribbon in the draw direction and transverse to the draw direction to shape the ribbon into a dome or bowl shape. The method includes cutting the ribbon to form a glass sheet comprising the dome or bowl shape.

Embodiments described herein provide an exemplary substrate disk shape to minimize the out of plane distortion of a platter during operation of a HDD. Aspects described herein also provide an exemplary full sheet shape from which such disks can be cut efficiently. Additional aspects also provide a fusion forming process by which such full sheets can be obtained. Such aspects can enable low cost manufacturing of HDD substrates with performance advantages for designs employing thin platters or HAMR technology. It should be noted that typical fusion processes do not produce a sheet with the desired intrinsic shape. Rather, typical fusion processes may require that the full sheet warp and edge/corner gradients be controlled, so warp on the length scales required for HDD applications is generally ignored.

Embodiments described herein and claimed can enable the maximization of areal density of a disk by reducing out of plane distortion of the disk during operation which in turn allows minimization of the head/disk spacing. As HDD manufacturers drive to thinner platters the need to minimize out of plane distortion due to substrate shape increases.

A glass sheet from which glass substrates possessing the exemplary shape can be cut is advantageous because it enables lower cost manufacturing. Fusion sheet processing as described herein is advantaged versus conventional press/mold processing because fusion sheets can be made with a thickness that is closer to the target thickness and the fusion surface has low roughness and is free of defects induced by contact with rollers, molds, tin bath, or the like.

Additional features and advantages will be set forth in the detailed description which follows, and in part will be readily apparent to those skilled in the art from that description or recognized by practicing the embodiments described herein, including the detailed description which follows, the claims, as well as the appended drawings.

It is to be understood that both the foregoing general description and the following detailed description describe various embodiments and are intended to provide an overview or framework for understanding the nature and character of the claimed subject matter. The accompanying drawings are included to provide a further understanding of the various embodiments, and are incorporated into and constitute a part of this specification. The drawings illustrate various embodiments described herein, and together with the description serve to explain the principles and operations of the claimed subject matter.

## BRIEF DESCRIPTION OF THE DRAWINGS

FIG. 1 depicts a portion of an exemplary hard disk drive (HDD);
FIGS. 2A-2D depict exemplary shapes produced in a fusion forming process;
FIGS. 3A-3D depict exemplary initial and final disk shapes;
FIG. 4 depicts an exemplary shape of a disk that yields a near flat shape under hard drive operating conditions;
FIG. 5 depicts an exemplary fusion formed full glass sheet with the same curvature depicted in FIG. 4;
FIG. 6A depicts an exemplary ribbon setting zone shape in a glass ribbon;
FIG. 6B depicts an exemplary intrinsic shape for the shape of small glass parts for a baseline condition;
FIG. 7A depicts an exemplary ribbon setting zone shape in a glass ribbon;
FIG. 7B depicts an exemplary intrinsic shape for the shape of small glass parts for a condition that constrains the ribbon position inside the setting zone;
FIG. 8 schematically depicts an exemplary glass manufacturing apparatus;
FIG. 9 schematically depicts a side view of the pulling roll pairs and the thermal control units of the glass manufacturing apparatus of FIG. 8;
FIG. 10 depicts an exemplary glass sheet for forming a plurality of annular glass substrates; and
FIG. 11 depicts an exemplary annular glass substrate.

## DETAILED DESCRIPTION

Reference will now be made in detail to embodiments and aspects of the present disclosure, examples of which are illustrated in the accompanying drawings. Whenever possible, the same reference numerals will be used throughout the drawings to refer to the same or like parts. However, this disclosure may be embodied in many different forms and should not be construed as limited to the embodiments set forth herein.

Ranges can be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

Directional terms as used herein - for example up, down, right, left, front, back, top, bottom, vertical, horizontal - are made only with reference to the figures as drawn and are not intended to imply absolute orientation.

Unless otherwise expressly stated, it is in no way intended that any method set forth herein be construed as requiring that its steps be performed in a specific order, nor that with any apparatus, specific orientations be required. Accordingly, where a method claim does not actually recite an order to be followed by its steps, or that any apparatus claim does not actually recite an order or orientation to individual components, or it is not otherwise specifically stated in the claims or description that the steps are to be limited to a specific order, or that a specific order or orientation to components of an apparatus is not recited, it is in no way intended that an order or orientation be inferred, in any respect. This holds for any possible non-express basis for interpretation, including: matters of logic with respect to arrangement of steps, operational flow, order of components, or orientation of components; plain meaning derived from grammatical organization or punctuation, and; the number or type of embodiments described in the specification.

As used herein, the singular forms "a," "an," and "the" include plural references unless the context clearly dictates otherwise. Thus, for example, reference to "a" component includes aspects having two or more such components, unless the context clearly indicates otherwise.

As used herein, "molten glass" shall be construed to mean a molten material which, upon cooling, can enter a glassy state. The term molten glass is used synonymously with the term "melt". The molten glass may form, for example, a majority silicate glass, although the present disclosure is not so limited.

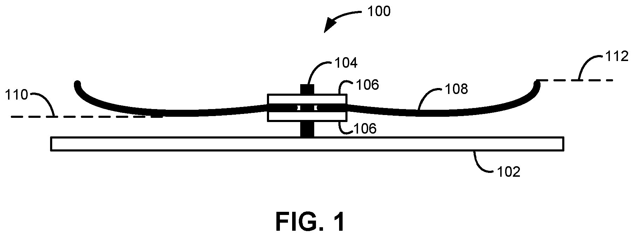

Referring now to FIG. 1, a portion of an exemplary hard disk drive (HDD) 100 is depicted. Portion of HDD 100 includes a partial housing 102, a spindle 104, spacers 106, and a disk 108. Other components of HDD 100 have been omitted for simplicity. Spindle 104 is rotatably mechanically coupled to housing 102. Spacers 106 are mechanically coupled to spindle 104 and clamp disk 108 therebetween. Spacers 106 may have an outer diameter larger than the inner diameter of disk 108. In certain exemplary embodiments, spacers 106 may have an outer diameter between about 25 mm and 35 mm (e.g., 31 mm). Disk 108 may include warp (which is exaggerated in FIG. 1) defined as the difference between a negative out of plane maximum as indicated at 110 for disk 108 and a positive out of plane maximum as indicated at 112 for disk 108. The disk 108 has a warp less than 0.20 $\mu$m.

An exemplary optimal disk shape for HDD operation produced from a fusion forming process has been determined. The Young's modulus for the disk has been determined to be between about 80 GPa and 86 GPa (e.g., 83 GPa). The Poisson's ratio for the disk has been determined to be between about 0.20 and 0.26 (e.g., 0.23). The density of the disk has been determined to be between about 2500 kg/m$^3$ and 2700 kg/m$^3$ (e.g., 2590 kg/m$^3$). The disk has a thickness between about 0.3 mm and 2 mm (e.g., 0.7 mm) or between about 0.3 mm and 0.7 mm, an inner diameter between about 20 mm and 30 mm (e.g., 25 mm), and an outer diameter between about 60 mm and 100 mm (e.g., 67 mm, 95 mm). Under an operational state, disk 108 is spinning at various speeds clamped between spacers 106.

To determine an optimal target disk shape, the disk shape can be characterized by a second order polynomial function of x- and y- Cartesian coordinates of the circular disk. Taking into consideration a fusion forming process and simplifying the optimization process, the second order terms can be kept as shown in Equation 1 below. The coefficients A and B are defined as design variables and are fine tuned in this disclosure.

$$Z = Ax^2 + By^2 \hspace{4cm} 1$$

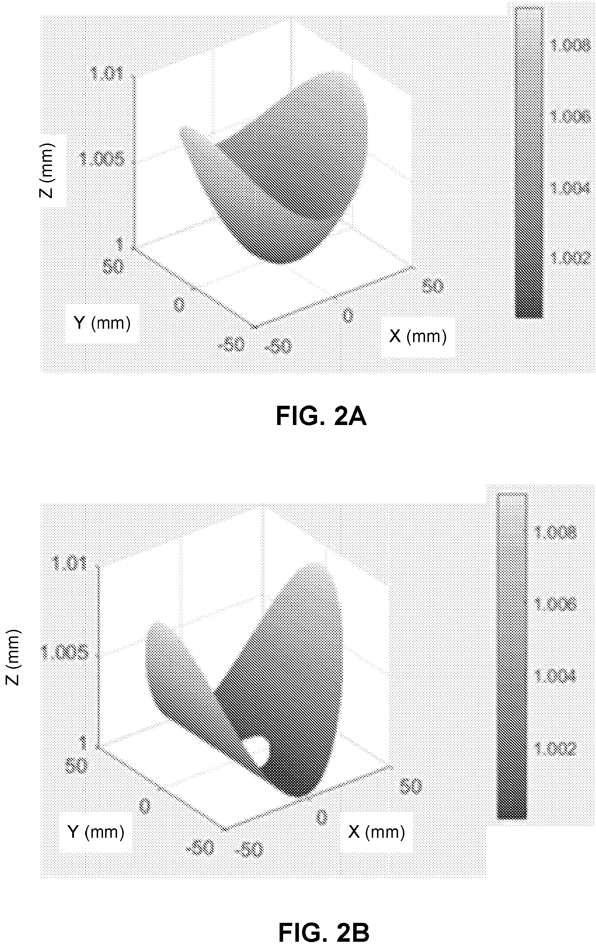

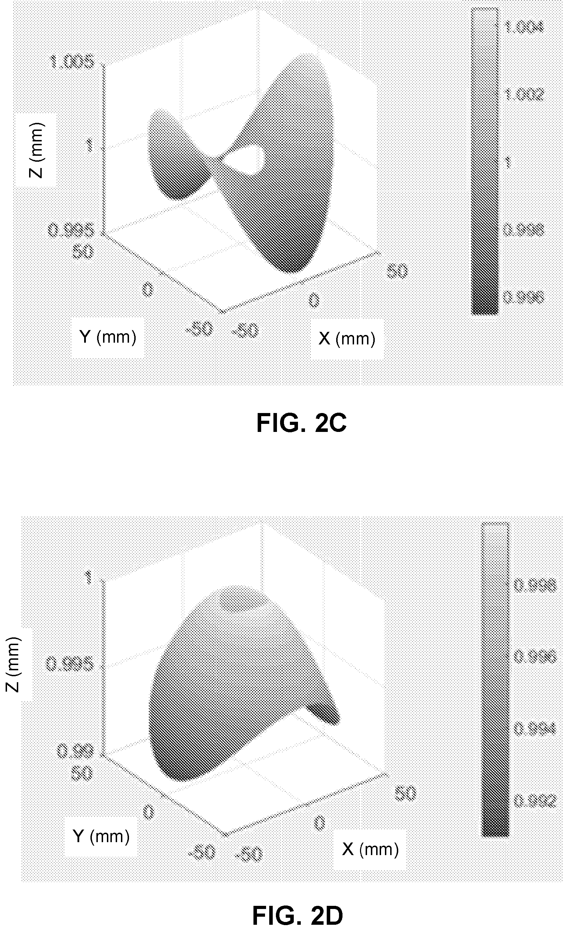

FIGS. 2A-2D depict exemplary shapes produced in a fusion forming process using Cartesian coordinates X, Y, and Z in millimeters. FIG. 2A depicts a bowl shape, FIG. 2B depicts a cylinder shape, FIG. 2C depicts a saddle shape, and FIG. 2D depicts a dome shape. Each shape is plotted in FIGS. 2A-2D using different sets of coefficients A and B in Equation 1 above. For the bowl shape of FIG. 2A, A = 4 and B = 2 (i.e., $Z = 4x^2 + 2y^2$). For the cylinder shape of FIG. 2B, A = 4 and B = 0 (i.e., $Z = 4x^2$). For the saddle shape of FIG. 2C, A = 2 and B = -2 (i.e., $Z = 2x^2 - 2y^2$). For the dome shape of FIG. 2D, A = -4 and B = -2 (i.e., $Z = -4x^2-2y^2$).

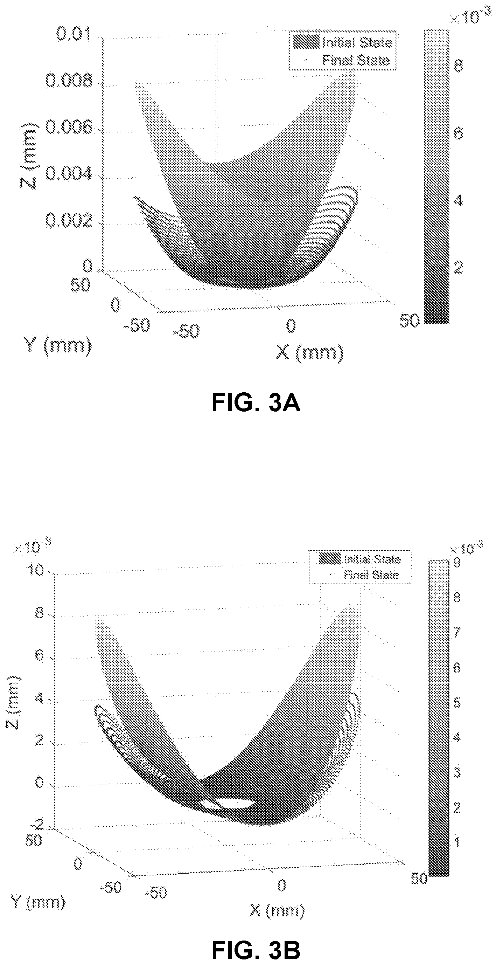

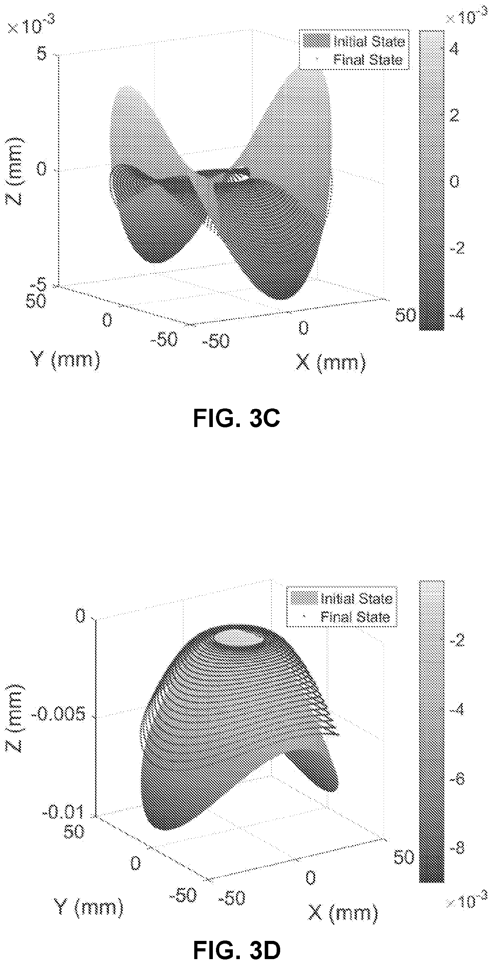

The deformed shapes under gravity and clamping force (e.g., due to spacers) corresponding to the four shapes of FIGS. 2A-2D are depicted in FIGS. 3A-3D, respectively. FIGS. 3A-3D depict exemplary initial disk shapes (i.e., prior to clamping between spacers and without gravity effects) and final disk shapes (i.e., after clamping between spacers and with gravity effects) using Cartesian coordinates X, Y, and Z in millimeters. With reference to FIGS. 3A-3D, out-of-plane displacements under gravity are 4.48 μm, 5.19 μm, 5.19 μm, and 6.66 μm for bowl (FIG. 3A), cylinder (FIG. 3B), saddle (FIG. 3C), and dome (FIG. 3D) shapes, respectively. If gravity and disk rotation with 7200 revolutions per minute are considered simultaneously, the warps are 4.26 μm, 4.83 μm, 4.83 μm, and 6.36 μm for bowl, cylinder, saddle, and dome shapes, respectively. For both cases, the bowl shape is superior to the other candidate shapes. Investigating the magnitude of A and B further, it was determined that, through the use of symmetry, warp may be minimized and has a magnitude of 0.17 μm when A = B = 0.8. With of A, B, and Z in millimeters, an exemplary optimal shape may be described using Equation 2 below.

$$Z = \frac{0.8x^2 + 0.8y^2}{1E6} \qquad\qquad 2$$

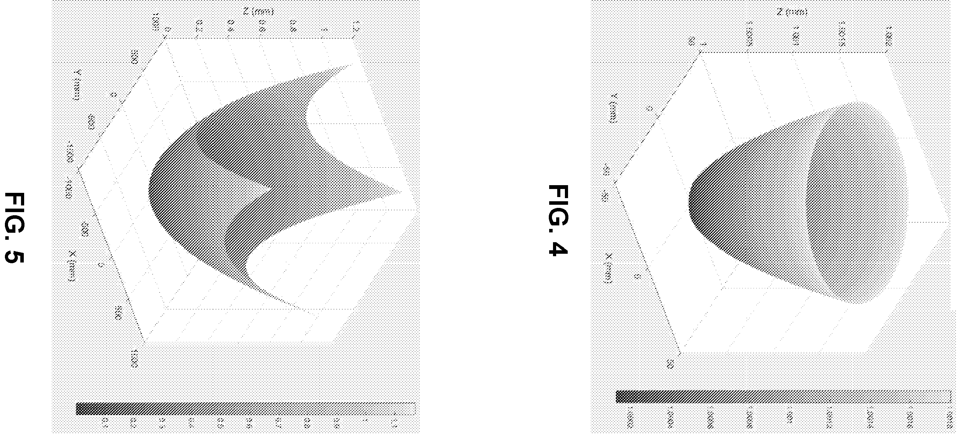

FIG. 4 depicts an exemplary optimal shape of a disk that yields a near flat shape under hard drive operating conditions using Cartesian coordinates X, Y, and Z in millimeters. With regard to optimal disk shapes, at least two issues should be considered. First, if a perfectly flat disk is targeted, it can be observed that the warp is about 1.00 μm, which is much larger than the desired value of 0.17 μm. This indicates that a target flat shape will not provide the lowest warp under an operational state. Second, if the bowl shape cannot be identified during the disk installation process, there is a high chance that the worst shape, dome shape, will be used. Thus, if orientation of disk shape cannot be maintained during the HDD assembly process, a saddle shape (which is symmetric about the x-y plane) may be a better solution.

Results from a free vibration analysis indicated that warp has a negligible effect on the natural frequencies and vibration modes. These dynamic quantities are directly related to the out-of-plane disk vibration response. Thus, it was determined that the optimal solution found in Equation 2 was indeed optimal under both operational state and disk vibration induced by air turbulence.

Cutting fusion formed glass sheets into smaller parts allows some relief of the in-plane stress generated by the thermal history that a glass ribbon experiences. As this in-plane stress is relieved to very small magnitudes, the "intrinsic" shape captured in the glass begins to dominate the resultant shape of small glass pieces through the local curvature. In this manner, the intrinsic shape is set into the glass inside the "setting zone," which is bounded by the temperatures at which the instantaneous coefficient of thermal expansion (CTE) is changing at a much lower rate. To produce a glass sheet from a fusion forming process, the glass sheet should have a similar curvature as the optimal disks that will be cut out. FIG. 5 depicts an exemplary optimal fusion formed full glass sheet based on the optimal disk shape depicted in FIG. 4 using Cartesian coordinates X, Y, and Z in millimeters.

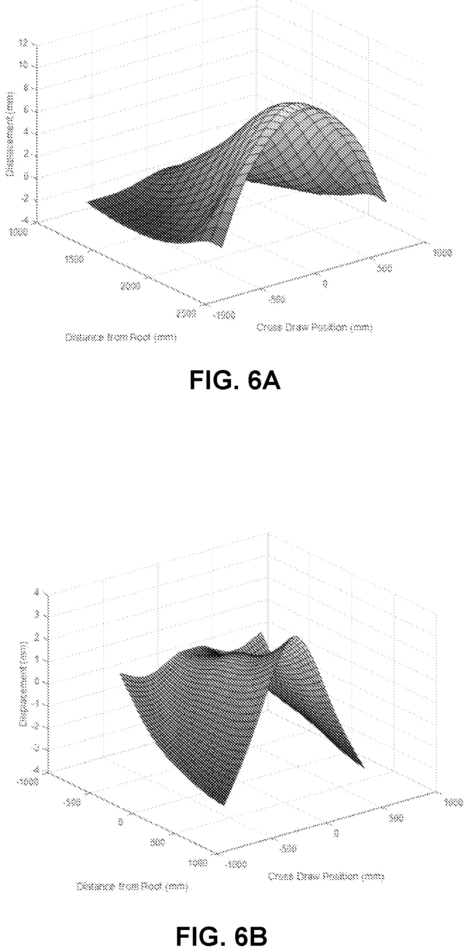

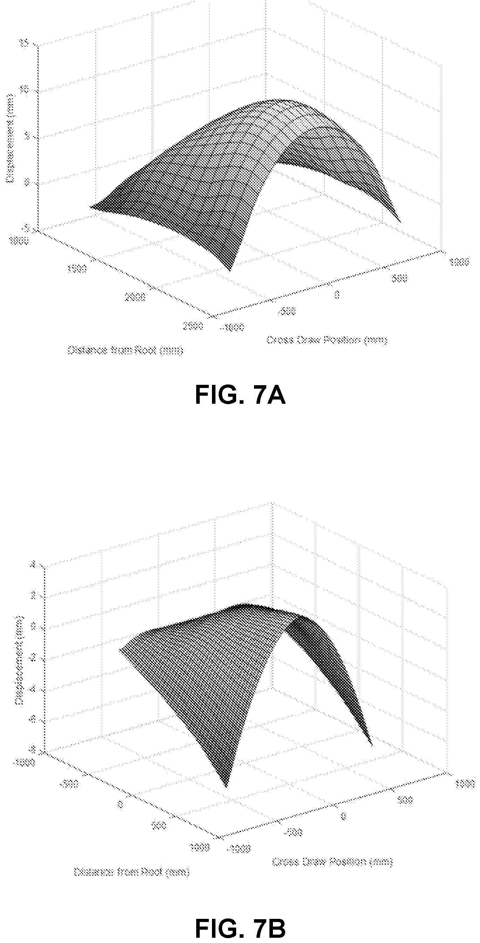

FIGS. 6A-6B and FIGS. 7A-7B illustrate a comparison of the instantaneous shape of the glass ribbon inside the setting zone and the resultant intrinsic shape calculation that stitches together the gravity free shapes of the glass parts. FIG. 6A depicts an exemplary ribbon setting zone shape in a glass ribbon and FIG. 6B depicts an exemplary intrinsic shape for the shape of small glass parts for a baseline condition. FIG. 7A depicts an exemplary ribbon setting zone shape in a glass ribbon and FIG. 7B depicts an exemplary intrinsic shape for the shape of small glass parts for a condition that constrains the ribbon position inside the setting zone. Each FIG. 6A-6B and FIG. 7A-7B includes the cross draw position on the x-axis, the distance from the root on the y-axis, and the displacement on the z-axis in millimeters.

With reference to these figures it can be observed that as the shape of the glass ribbon inside the setting zone (FIG. 6A and 7A) changes as a result of mechanical means thereby limiting the effect of the thermally induced planar stress, the intrinsic shape (FIG. 6B and 7B) changes as well. In an exemplary fusion draw process, the mechanical means may be limited to maintain the pristine glass surface, meaning that these ribbon shape changes may need to be accomplished using thermal means. To achieve the desired optimum shape discussed above, the temperature profile may need to be adjusted such that the boundaries of the area in question are placed in tension while the central area is in compression both across-the-draw and down-the-draw. This stress pattern will manifest itself into a bowl/dome shape in the glass ribbon, thus producing the desired glass disk shape. From mechanics of glass substrates or sheets, a stress pattern with sheet edges in tension and center in compression results in a dome shape (or bowl), and a stress pattern with sheet edges in compression and center in tension results in a saddle shape.

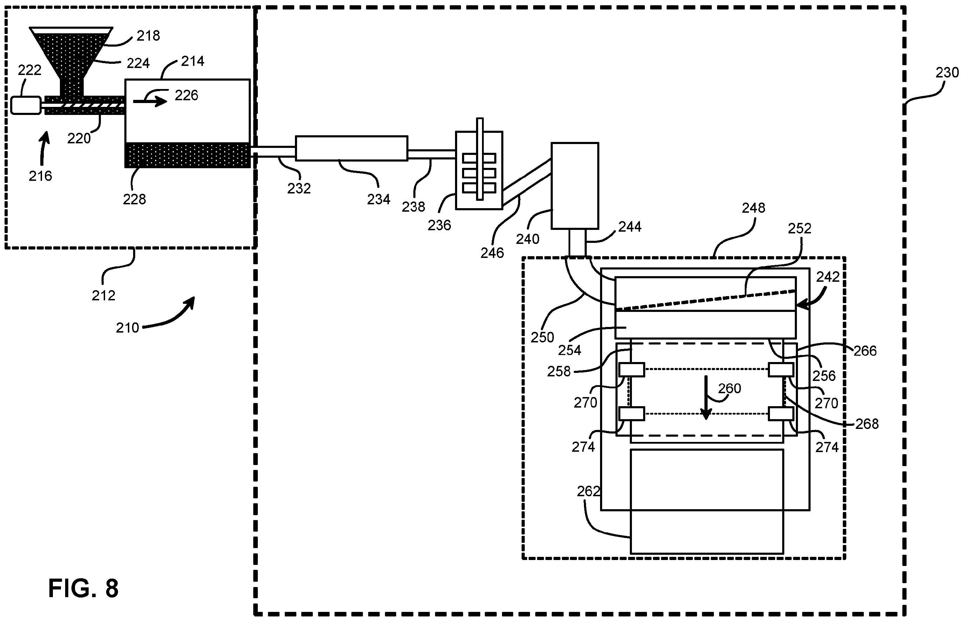

FIG. 8 is an exemplary glass manufacturing apparatus 210, for example a fusion down draw manufacturing apparatus. In some aspects, the glass manufacturing apparatus 210 can comprise a glass melting furnace 212 that can include a melting vessel 214. In addition to melting vessel 214, glass melting furnace 212 can optionally include one or more additional components such as heating elements (e.g., combustion burners and/or electrodes) configured to heat raw material and convert the raw material into molten glass. In further aspects, glass melting furnace 212 may include thermal management devices (e.g., insulation components) that reduce heat loss from the melting vessel. In still further aspects, glass melting furnace 212 may include electronic devices and/or electromechanical devices that facilitate melting of the raw material into a glass melt. Still further, glass melting furnace 212 may include support structures (e.g., support chassis, support member, etc.) or other components.

In some aspects, melting furnace 212 may be incorporated as a component of a glass manufacturing apparatus configured to fabricate a glass article, for example a glass ribbon of an indeterminate length, although in further aspects, the glass manufacturing apparatus may be configured to form other glass articles without limitation, such as glass rods, glass tubes, glass envelopes (for example, glass envelopes for lighting devices, e.g., light bulbs) and glass lenses, although many other glass articles are contemplated. In some examples, the melting furnace may be incorporated as a component of a glass manufacturing apparatus comprising a slot draw apparatus, a float bath apparatus, a down draw apparatus (e.g., a fusion down draw apparatus), an up draw apparatus, a pressing apparatus, a rolling apparatus, a tube drawing apparatus or any other glass manufacturing apparatus that would benefit from the present disclosure. By way of example, FIG. 8 schematically illustrates glass melting furnace 212 as a component of a fusion down draw glass manufacturing apparatus 210 for fusion drawing a glass ribbon for subsequent processing into individual glass sheets or rolling the glass ribbon onto a spool.

Glass manufacturing apparatus 210 (e.g., fusion down draw apparatus 210) can optionally include an upstream glass manufacturing apparatus 216 positioned upstream relative to glass melting vessel 214. In some examples, a portion of, or the entire upstream glass manufacturing apparatus 216, may be incorporated as part of the glass melting furnace 212. As shown in the aspect illustrated in FIG. 8, the upstream glass manufacturing apparatus 216 can include a raw material storage bin 218, a raw material delivery device 220 and a motor 222 connected to the raw material delivery device. Storage bin 218 may be configured to store a quantity of raw material 224 that can be fed into melting vessel 214 of glass melting furnace 212 through one or more feed ports, as indicated by arrow 226. Raw material 224 typically comprises one or more glass forming metal oxides and one or more modifying agents. In some examples, raw material delivery device 220 can be powered by motor 222 such that raw material delivery device 220 delivers a predetermined amount of raw material 224 from the storage bin 218 to melting vessel 214. In further examples, motor 222 can power raw material delivery device 220 to introduce raw material 224 at a controlled rate based on a level of molten glass sensed downstream from melting vessel 214 relative to a flow direction of the molten glass. Raw material 224 within melting vessel 214 can thereafter be heated to form molten glass 228.

Glass manufacturing apparatus 210 can also optionally include a downstream glass manufacturing apparatus 230 positioned downstream of glass melting furnace 212 relative to a flow direction of the molten glass 228. In some examples, a portion of downstream glass manufacturing apparatus 230 may be incorporated as part of glass melting furnace 212. However, in some instances, first connecting conduit 232 discussed below, or other portions of the downstream glass manufacturing apparatus 230, may be incorporated as part of the glass melting furnace 212.

Downstream glass manufacturing apparatus 230 can include a first conditioning (i.e. processing) vessel, such as fining vessel 234, located downstream from melting vessel 214 and coupled to melting vessel 214 by way of the above-referenced first connecting conduit 232. In some examples, molten glass 228 may be gravity fed from melting vessel 214 to fining vessel 234 by way of first connecting conduit 232. For instance, gravity may drive molten glass 228 through an interior pathway of first connecting conduit 232 from melting vessel 214 to fining vessel 234. It should be understood, however, that other conditioning vessels may be positioned downstream of melting vessel 214, for example between melting vessel 214 and fining vessel 234. In some aspects, a conditioning vessel may be employed between the melting vessel and the fining vessel wherein molten glass from a primary melting vessel is further heated in a secondary vessel to continue the melting process, or cooled to a temperature lower than the temperature of the molten glass in the primary melting vessel before entering the fining vessel.

The downstream glass manufacturing apparatus 230 can further include another conditioning vessel, such as a mixing apparatus 236, for example a stirring vessel, for mixing the molten glass that flows downstream from fining vessel 234. Mixing apparatus 236 can be used to provide a homogenous glass melt composition, thereby reducing chemical or thermal inhomogeneities that may otherwise exist within the fined molten glass exiting the fining vessel. As shown, fining vessel 234 may be coupled to mixing apparatus 236 by way of a second connecting conduit 238. In some aspects, molten glass 228 may be gravity fed from the fining vessel 234 to mixing apparatus 236 by way of second connecting conduit 238. For instance, gravity may drive molten glass 228 through an interior pathway of second connecting conduit 238 from fining vessel 234 to mixing apparatus 236. Typically, the molten glass within the mixing apparatus includes a free surface, with a free volume extending between the free surface and a top of the mixing apparatus. It should be noted that while mixing apparatus 236 is shown downstream of fining vessel 234 relative to a flow direction of the molten glass, mixing apparatus 236 may be positioned upstream from fining vessel 234 in other aspects. In some aspects, downstream glass manufacturing apparatus 230 may include multiple mixing apparatus, for example a mixing apparatus upstream from fining vessel 234 and a mixing apparatus downstream from fining vessel 234. These multiple mixing apparatus may be of the same design, or they may be of a different design from one another. In some aspects, one or more of the vessels and/or conduits may include static mixing vanes positioned therein to promote mixing and subsequent homogenization of the molten material.

Downstream glass manufacturing apparatus 230 can further include another conditioning vessel such as delivery vessel 240 that may be located downstream from mixing apparatus 236. Delivery vessel 240 may condition molten glass 228 to be fed into a downstream forming device. For instance, delivery vessel 240 can act as an accumulator and/or flow controller to adjust and provide a consistent flow of molten glass 228 to forming body 242 by way of exit conduit 244. The molten glass within delivery vessel 240 can, in some aspects, include a free surface, wherein a free volume extends upward from the free surface to a top of the delivery vessel. As shown, mixing apparatus 236 may be coupled

to delivery vessel 240 by way of third connecting conduit 246. In some examples, molten glass 228 may be gravity fed from mixing apparatus 236 to delivery vessel 240 by way of third connecting conduit 246. For instance, gravity may drive molten glass 228 through an interior pathway of third connecting conduit 246 from mixing apparatus 236 to delivery vessel 240.

Downstream glass manufacturing apparatus 230 can further include forming apparatus 248 comprising the above-referenced forming body 242, including inlet conduit 250. Exit conduit 244 can be positioned to deliver molten glass 228 from delivery vessel 240 to inlet conduit 250 of forming apparatus 248. Forming body 242 in a fusion down draw glass making apparatus can comprise a trough 252 positioned in an upper surface of the forming body and converging forming surfaces 254 (only one surface shown) that converge in a draw direction along a bottom edge (root) 256 of the forming body. Molten glass delivered to the forming body trough via delivery vessel 240, exit conduit 244 and inlet conduit 250 overflows the walls of the trough and descends along the converging forming surfaces 254 as separate flows of molten glass. It should be noted that the molten glass within the forming body trough comprises a free surface, and a free volume extends from the free surface of the molten glass to the top of an enclosure within which the forming body is positioned. The flow of molten glass down at least a portion of the converging forming surfaces is intercepted and directed by a dam and edge directors. The separate flows of molten glass join below and along the root to produce a single ribbon of molten glass 258 that is drawn in a draw direction 260 from root 256 by applying a downward tension to the glass ribbon, such as by gravity and/or pulling roll pairs, to control the dimensions of the glass ribbon as the molten glass cools and a viscosity of the material increases. Therefore, draw path 260 extends transverse to a width of the glass ribbon 258. Glass ribbon 258 goes through a visco-elastic transition in a setting zone 268 and acquires mechanical properties that give glass ribbon 258 stable dimensional characteristics.

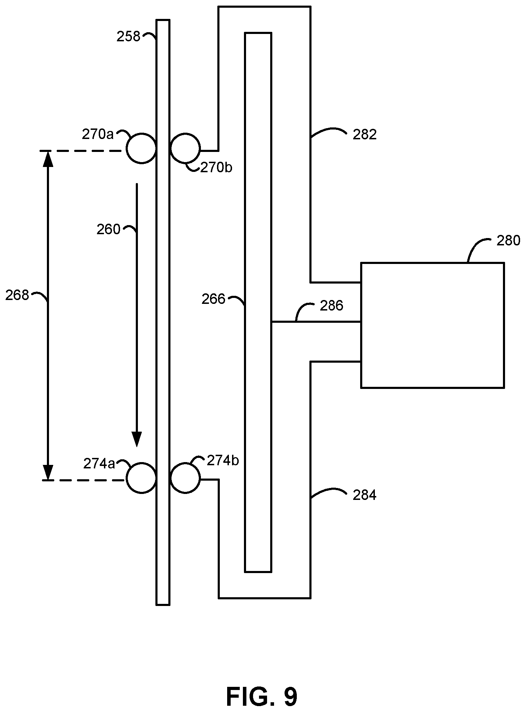

Forming apparatus 248 may further include two upper pulling roll pairs 270, two lower pulling roll pairs 274, and thermal control units 266. Each pulling roll pair 270 and 274 is controlled by a controller (FIG. 9) through a signal path. Each pulling roll pair 270 and 274 contacts or pinches glass ribbon 258 and are rotated to move the glass ribbon in the direction indicated at 260. A first upper pulling roll pair 270 is arranged at a first (i.e., left) edge of glass ribbon 258 and a second upper pulling roll pair 270 is arranged at a second (i.e., right) edge of glass ribbon 258 directly opposite to the first upper pulling roll pair 270. A first lower pulling roll pair 274 is arranged on the first (i.e., left) edge of glass ribbon 258 and a second lower pulling roll pair 274 is arranged on the second (i.e., right) edge of glass ribbon 258 directly opposite to the first lower pulling roll pair 274. Pulling rolls pairs 270 and 274 and thermal control units 266 are controlled to give glass ribbon 258 the desired shape within setting zone 268 as will be described below with reference to FIG. 9. Glass ribbon 258 may in some aspects be separated into individual glass sheets 262 by a glass separation apparatus (not shown) in an elastic region of the glass ribbon, while in further aspects, the glass ribbon may be wound onto spools and stored for further processing.

FIG. 9 schematically depicts a side view of an upper pulling roll pair 270 and a lower pulling role pair 274 and thermal control unit 266 of the glass manufacturing apparatus of FIG. 8. FIG. 9 also schematically depicts a controller 280. Pulling roll pair 270 includes pulling rolls 270a and 270b (collectively referred to as pulling roll pair 270). Pulling roll pair 270 may be controlled by controller 280 through a signal path 282. Pulling roll 270a is arranged on a first side of glass ribbon 258, and pulling roll 270b is arranged on a second side of glass ribbon 258 directly opposite to pulling roll 270a. Pulling rolls 270a and 270b contact or pinch glass ribbon 258 and are rotated to move the glass ribbon in the direction indicated at 260. Pulling roll pair 274 includes pulling rolls 274a and 274b (collectively referred to as pulling roll pair 274). Pulling roll pair 274 may be controlled by controller 280 through a signal path 284. Pulling roll 274a is arranged on the first side of glass ribbon 258, and pulling roll 274b is arranged on the second side of glass ribbon 258 directly opposite to pulling roll 274a. Pulling rolls 274a and 274b contact or pinch glass ribbon 258 and are rotated to move the glass ribbon in the direction indicated at 260. In other aspects, pulling roll pair 270 and/or 274 may be excluded or additional pulling roll pairs may be used in addition to pulling roll pairs 270 and 274.

Thermal control units 266 may be controlled by controller 280 through a signal path 286. While thermal control units 266 are illustrated in FIG. 9 as being arranged on the second side of glass ribbon 258, in other aspects thermal control units 266 may be arranged on the first side of glass ribbon 258 in place of or in addition to being arranged on the second side of glass ribbon 258. Controller 280 may control the operation of thermal control units 266 and pulling roll pairs 270 and 274 to give glass ribbon 258 the desired shape.

Within the setting zone indicated for example at 268, the temperature dependent coefficient of thermal expansion may be non-linear. Since the shape of glass ribbon 258 determines the out of plane deformation or warp of the glass substrates produced therefrom, the shape of glass ribbon 258 may be controlled by using a combination of pulling roll pairs 270 and 274 and controlled thermal gradients provided by thermal control units 266. Thermal control units 266 may add energy to (i.e., heat) and/or extract energy from (i.e., cool) glass ribbon 258 in a controlled manner. The specific method in which thermal control units 266 and pulling roll pairs 270 and 274 are used to influence the shape of glass ribbon 258 may be dependent upon the glass composition and other factors, such as, for example, the glass flow density, the methods of thermal control, and the size of glass ribbon 258.

Thermal control units 266 influence the temperature gradients and cooling rates both in the vertical direction (i.e., draw direction 216) and in the horizontal direction (i.e., transverse to the draw direction 216). These temperature gradients work in concert with pulling roll pairs 270 and 274. Pulling roll pairs 270 and 274 may include out of plane offsets to control the position of glass ribbon 258 as well as variable torque control, tilt position, and pinch (i.e., normal) force that control the amount of mechanical tension that is acted upon glass ribbon 258. The temperature gradients also control the tension acting upon glass ribbon 258 due to thermal impact, which is based on the glass material properties.

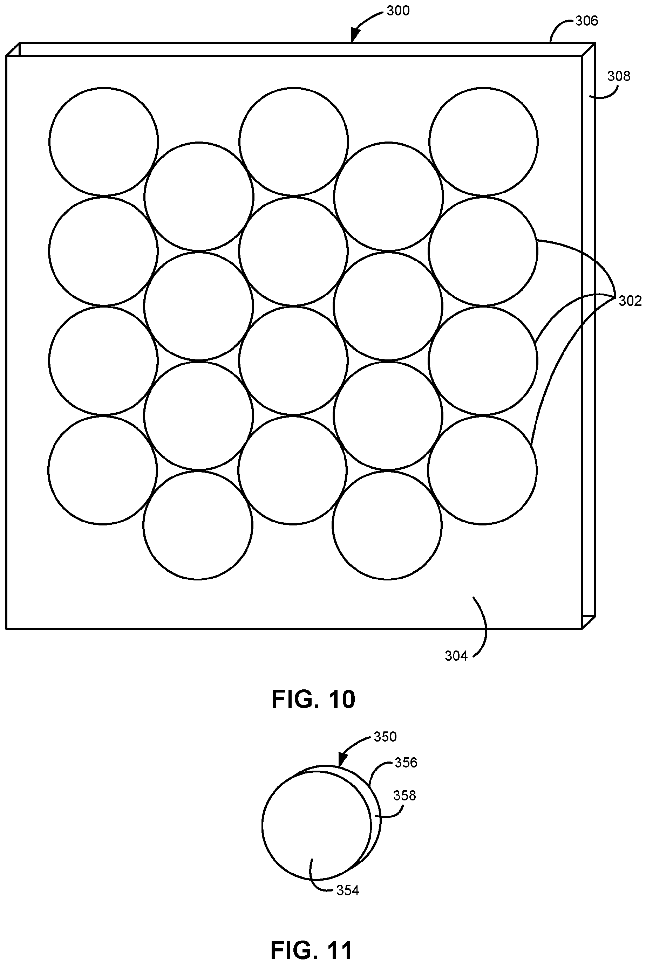

FIG. 10 depicts an exemplary glass sheet 300 for forming a plurality of annular glass substrates 302. Glass sheet 300 may be a fusion glass sheet formed using the glass manufacturing apparatus of FIGS. 8 and 9. Glass sheet 300 includes a first major surface 304, a second major surface 306 opposite to the first major surface 304, and an edge surface 308 extending between the first major surface 304 and the second major surface 306. In certain exemplary aspects, glass sheet 300 has a thickness (i.e., the distance between first major surface 304 and second major surface 306) between about 0.3 mm and 2 mm or between about 0.3 mm and 0.7 mm. Glass sheet 300 has a dome or bowl shape. Glass sheet 300 may be cut to form a plurality of annular glass substrates 302. While in the example illustrated in FIG. 10, the plurality of annular glass substrates 302 are arranged in a hexagonal pattern, in other examples the plurality of annular glass substrates 302 may be arranged in another suitable pattern for cutting from glass sheet 300. Each of the plurality of annular glass substrates 302 may be cut from glass sheet 300 using a laser or another suitable process.

FIG. 11 depicts an exemplary annular glass substrate 350. Annular glass substrate 350 may be cut from a glass sheet, such as glass sheet 300 of FIG. 10. Annular glass substrate 350 may be used to fabricate a HDD disk. Annular glass substrate 350 includes a first major surface 354, a second major surface 356 opposite to the first major surface 354, and an edge surface 358 extending between the first major surface 354 and the second major surface 356. The annular glass substrate 350 has a thickness (i.e., the distance between first major surface 354 and second major surface 356) between about 0.3 mm and 2 mm or in some embodiments between about 0.3 mm and 0.7 mm. Annular glass substrate 350 has a dome or bowl shape. In certain exemplary embodiments, annular glass substrate 350 may have a diameter between about 90 mm and 100 mm. Annular glass substrate 350 may have a Young's modulus between 80 GPa and 86 GPa, a Poisson's ratio between 0.20 and 0.26, and a density between 2500 kg/m$^3$ and 2700 kg/m$^3$. The warp of annular glass substrate 350 is less than about 0.20 $\mu$m.

## Claims

1. An annular glass substrate comprising:

   a first major surface;
   a second major surface opposite to the first major surface; and
   an edge surface extending between the first major surface and the second major surface,
   wherein the annular glass substrate has a thickness between 0.3 mm and 2 mm,
   the annular glass substrate has a dome shape or a bowl shape, and
   the annular glass substrate comprises a warp less than 0.2 $\mu$m.

2. The annular glass substrate of claim 1, wherein the shape is a function of the relationship:

$$Z = \frac{0.8x^2 + 0.8y^2}{10^6}$$

   where $Z$, $x$, and $y$ are Cartesian coordinate values in millimeters.

3. The annular glass substrate of claim 1 or claim 2, wherein the annular glass substrate has a thickness between 0.3 mm and 0.7 mm.

4. The annular glass substrate of any of claims 1-3, wherein the annular glass substrate comprises a diameter between 60 mm and 100 mm.

5. The annular glass substrate of any of claims 1-4, wherein the annular glass substrate comprises a Young's modulus between 80 GPa and 86 GPa, a Poisson's ratio between 0.20 and 0.26, and a density between 2500 kg/m$^3$ and

2700 kg/m$^3$.

**Patentansprüche**

1. Ringförmiges Glassubstrat, umfassend:

   eine erste Hauptfläche;
   eine zweite Hauptfläche gegenüber der ersten Hauptfläche; und
   eine Kantenfläche, die sich zwischen der ersten Hauptfläche und der zweiten Hauptfläche erstreckt,
   wobei das ringförmige Glassubstrat eine Dicke zwischen 0,3 mm und 2 mm aufweist,
   das ringförmige Glassubstrat eine Kuppelform oder eine Schalenform aufweist, und
   das ringförmige Glassubstrat eine Verwerfung von weniger als 0,2 µm umfasst.

2. Ringförmiges Glassubstrat nach Anspruch 1, wobei die Form eine Funktion der folgenden Beziehung ist:

$$Z = \frac{0,8x^2 + 0,8y^2}{10^6}$$

   wobei Z, x und y kartesische Koordinatenwerte in Millimetern sind.

3. Ringförmiges Glassubstrat nach Anspruch 1 oder Anspruch 2, wobei das ringförmige Glassubstrat eine Dicke zwischen 0,3 mm und 0,7 mm aufweist.

4. Ringförmiges Glassubstrat nach einem der Ansprüche 1-3, wobei das ringförmige Glassubstrat einen Durchmesser zwischen 60 mm und 100 mm umfasst.

5. Ringförmiges Glassubstrat nach einem der Ansprüche 1-4, wobei das ringförmige Glassubstrat ein Elastizitätsmodul zwischen 80 GPa und 86 GPa, ein Poisson-Verhältnis zwischen 0,20 und 0,26 und eine Dichte zwischen 2500 kg/m$^3$ und 2700 kg/m$^3$ umfasst.

**Revendications**

1. Substrat de verre annulaire comprenant :

   une première surface principale ;
   une seconde surface principale opposée à la première surface principale ; et
   une surface de bord s'étendant entre la première surface principale et la seconde surface principale, ledit substrat de verre annulaire possédant une épaisseur comprise entre 0,3 mm et 2 mm,
   ledit substrat de verre annulaire possédant une forme de dôme ou une forme de bol, et
   ledit substrat de verre annulaire comprenant un gauchissement inférieur à 0,2 µm .

2. Substrat de verre annulaire selon la revendication 1, ladite forme étant une fonction de la relation :

$$Z = \frac{0.8x^2 + 0.8y^2}{10^6}$$

   où Z, x et y sont des valeurs de coordonnées cartésiennes en millimètres.

3. Substrat de verre annulaire selon la revendication 1 ou la revendication 2, ledit substrat de verre annulaire possédant une épaisseur comprise entre 0,3 mm et 0,7 mm.

4. Substrat de verre annulaire selon l'une quelconque des revendications 1 à 3, ledit substrat de verre annulaire comprenant un diamètre compris entre 60 mm et 100 mm.

**5.** Substrat de verre annulaire selon l'une quelconque des revendications 1 à 4, ledit substrat de verre annulaire comprenant un module de Young compris entre 80 GPa et 86 GPa, un coefficient de Poisson entre 0,20 et 0,26 et une densité entre 2500 kg/m$^3$ et 2700 kg/m$^3$.

**FIG. 1**

**FIG. 2A**

**FIG. 2B**

FIG. 2C

FIG. 2D

FIG. 3A

FIG. 3B

**FIG. 3C**

**FIG. 3D**

FIG. 4

FIG. 5

**FIG. 6A**

**FIG. 6B**

**FIG. 7A**

**FIG. 7B**

FIG. 8

FIG. 9

**FIG. 10**

**FIG. 11**

**REFERENCES CITED IN THE DESCRIPTION**

**Patent documents cited in the description**

- JP 2006225181 A
- US 2008066498 A1